# EUROPÄISCHE PATENTSCHRIFT

(11) **EP 2 011 727 B1**
(45) Veröffentlichungstag und Bekanntmachung des Hinweises auf die Patenterteilung: **29.02.2012**
(21) Anmeldenummer: 08011924.1
(22) Anmeldetag: 02.07.2008
(51) Int. Cl.: B62J 17/04, B62K 21/12

(54) **Aerostützeinrichtung für Fahrräder**
Aero-support device for bicycles
Dispositif d'aéroprotection pour vélos

(30) Priorität: 02.07.2007 DE 102007030762
(43) Veröffentlichungstag der Anmeldung: 07.01.2009
(73) Patentinhaber: Nicol, Morgan, 6917 Barbengo (CH)
(72) Erfinder: Nicol, Morgan, 6917 Barbengo (CH)
(74) Vertreter: Schütte, Hartmut

(56) Entgegenhaltungen:
- DE-U1- 8 914 961
- FR-A- 2 549 796
- JP-A- 10 086 879
- US-A1- 2004 060 382
- US-B1- 6 231 104

## Beschreibung

Die Erfindung betrifft eine Aerostützeinrichtung für Fahrräder und dergleichen. Es sind im Stand der Technik Aerostützeinrichtungen bekannt geworden, die es dem Benutzer ermöglichen, eine strömungsgünstige und bequeme Position auf einem Fahrrad einzunehmen.

Bei Rennfahrten ist der Windwiderstand ein wichtiger Faktor. Das gilt insbesondere auch bei Triathlonfahrten, bei denen laut Reglement ein Windschattenfahren nicht erlaubt ist, so dass der Windwiderstand eine große Bedeutung hat. Zur Reduktion des Windwiderstands werden z.B. strömungsgünstige Laufräder verwendet. Außerdem wird die Sitzposition des Fahrers optimiert, um die Stirnfläche zu minimieren. Dazu werden auch sogenannte Aerostützen eingesetzt, die Teil der Lenkstange sind oder die an der Lenkstange befestigt werden. Neben den Aerostützen sind dann meist noch Arm- oder Ellbogenauflagen vorgesehen, auf die der Benutzer seine Unterarme auflegen und sich dort abstützen kann. Gleichzeitig kann der Benutzer mit seinen Händen vordere Bereiche der Aerostützen greifen. Dadurch nimmt der Benutzer eine flache Haltung auf dem Fahrrad ein, die den Windwiderstand reduziert.

Die Aerostützen sind in vielen Fällen als zwei jeweils separate Stützen ausgebildet und enden häufig hörnerartig am vorderen Ende. Beim Treten kann der Fahrer gleichzeitig an den Aerostützen ziehen, um besonders hohe Kräfte auf die Pedale zu übertragen. Zur optimalen Kraftübertragung und Bequemlichkeit können die Aerostützen nach vorne hin schräg nach oben ansteigend ausgebildet sein. Derartige nach vorne und schräg nach oben ragende spitz endende Aerostützen können zu einem erhöhten Verletzungsrisiko für den Benutzer, Zuschauer bei Wettbewerben oder Passanten beim Training führen, wenn ein Unfall passiert.

Das Verletzungsrisiko wird verringert, wenn die beiden Aerostützen im vorderen Bereich schlaufenartig verbunden sind. Das erfordert aber einen erhöhten Material- und Fertigungsaufwand. Da ein wichtiger Gesichtspunkt auch das Design einer Fahrradkomponente ist, sollte eine verbindende Schlaufe nicht nur den technischen Anforderungen genügen, sondern dazu auch noch formschön gestaltet sein, wodurch der konstruktive und materielle Aufwand weiter steigt.

Ein Lenker mit schlaufenförmig verbundenen Aerostüzen beschreibt unter anderem die JP 10-86879. Dabei sind an einer Lenkerstange zwei Aerostützen angeordnet, die sich in einem forderen Bereich schlaufenaförmig vereinen. Um einem Benutzer ein komfortables Auflegen der Arme zu ermöglichen, ist eine Abdeckung vorgesehen, von der Arm- bzw. Ellenbogenauflagen ausgebildet werden.

Ein weiterer Nachteil bekannter Aerostützen ist, dass der Luftwiderstand groß ist, da sich örtlich viele Wirbel an den Stützen bilden.

Es ist deshalb die Aufgabe der vorliegenden Erfindung eine Aerostützeinrichtung zur Verfügung zu stellen, welche ein geringeres Verletzungsrisiko aufweist.

Diese Aufgabe wird gelöst durch eine Aerostützeinrichtung mit den Merkmalen des Anspruchs 1 und durch eine Abdeckeinrichtung mit den Merkmalen des Anspruchs 12. Bevorzugte Weiterbildungen sind Gegenstand der Unteransprüche. Weitere Vorteile und Merkmale ergeben sich aus der folgenden Beschreibung.

Die erfindungsgemäße Aerostützeinrichtung ist für ein Fahrrad vorgesehen und umfasst wenigstens zwei als langgestreckte Aerostützen ausgebildete Stützkomponenten, die sich im bestimmungsgemäßen Gebrauch eines Fahrrads im Wesentlichen in eine vordere Richtung erstrecken und welche von einem Benutzer gegriffen werden können. Weiterhin weist die Aerostützeinrichtung wenigstens zwei als Armauflagen ausgebildete Stützkomponenten auf, auf welchen ein Benutzer seine Unterarme oder Ellbogen abstützen kann, um z.B. einen geringeren Windwiderstand zu erzielen. Erfindungsgemäß ist wenigstens eine Abdeckeinrichtung vorgesehen, welche wenigstens zwei der Stützkomponenten gemeinsam umgibt.

Die Erfindung hat viele Vorteile. Ein erheblicher Vorteil ist, dass der Benutzer, Zuschauer oder Passanten bei einem Unfall besser vor Verletzungen geschützt sind, da die Spitzen der nach vorne abstehenden Aerostützen in der Abdeckeinrichtung aufgenommen sind. Außerdem wird durch die Abdeckeinrichtung eine aerodynamischere Gestaltung erzielt, wodurch der Windwiderstand sinkt. Durch die die zwei oder auch mehr Aerostützen gemeinsam abdeckende Abdeckeinrichtung wird die Anzahl entstehender Wirbel verringert, was den Luftwiderstand verringert.

Unter dem Begriff "Aero" ist im Sinne dieser Anmeldung eine Abkürzung von "aerodynamisch", sodass z.B. die Aerostützen auch als aerodynamische Stützen bezeichnet werden können. Die Aerostützen können, müssen aber nicht aerodynamisch gestaltet sein. Vielmehr erlauben die "Aero"-Komponenten eine aerodynamische Haltung auf dem Fahrrad.

Vorteilhafterweise können zwei oder mehr Abdeckeinrichtungen vorgesehen sein, die z.B. bereichsweise die Aerostützeinrichtung umgeben.

In bevorzugten Ausgestaltungen umgibt eine Abdeckeinrichtung die beiden langgestreckten Aerostützen gemeinsam. Bevorzugt ist auch, dass die gleiche oder eine andere Abdeckeinrichtung die beiden Armauflagen gemeinsam umgibt.

In anderen Ausgestaltungen umgibt jeweils eine Abdeckeinrichtung jeweils eine langgestreckte Aerostütze und jeweils eine Armauflage gemeinsam, sodass insbesondere eine Seitenaufteilung rechts/links erfolgt.

In allen Fällen weisen die in z.B. der Form von Streben ausgebildeten langgestreckten Aerostützen insbesondere etwa Unterarmlänge auf. Vorzugsweise beträgt die Länge zwischen etwa 20 cm und etwa 35 cm, bzw. zwischen etwa 8 und 14 Inches.

Die langgestreckten Aerostützen sind vorzugsweise benachbart angeordnet und können gabelartig aus einer gemeinsamen Stütze hervorgehen, sodass die langgestreckten Aerostützen an einem Ende in eine gemeinsame Stütze oder Halterung übergehen, während die Stützen am vorderen Ende separat voneinander enden.

Vorzugsweise sind auch zwei oder mehr kurze Aerostützen oder Griffenden vorgesehen, welche insbesondere an den Außenseiten der Aerostützeinrichtung angeordnet sind. Insbesondere sind die kurzen Aerostützen etwa halb so lang wie die langgestreckten Aerostützen. Vorzugsweise weisen die kurzen Aerostützen eine freie Länge zwischen 10 cm und 20 cm bzw. zwischen etwa 4 und 8 Inches auf.

Die Abdeckeinrichtung kann aus einem Gewebe bestehen oder ein solches umfassen.

In allen Ausgestaltungen besteht die Abdeckeinrichtung wenigstens teilweise aus einem dehnbaren und/oder flexiblen Material oder aus mehreren flexiblen Materialien. Vorzugsweise besteht die Abdeckeinrichtung wenigstens teilweise aus Latex oder Silikon. Falls die Abdeckeinrichtung ein Gewebe umfasst, besteht dieses insbesondere aus elastisch dehnbaren Fasern, wie z.B. Elasthan (Englisch: Spandex oder elasthene) oder ähnlichen oder vergleichbaren Fasern.

Die zwei oder mehr Armauflagen der Aerostützeinrichtung können als jeweils separate Armauflageeinheiten ausgebildet sein. Es ist auch möglich zwei oder mehr Armauflagen an einer Armauflageeinheit vorzusehen.

In allen Ausgestaltungen werden vorzugsweise auch die Armauflagen von Abdeckeinrichtungen umgeben. Auch der Fahrradcomputer wird vorzugsweise von der Abdeckeinrichtung aufgenommen und geschützt.

Die Abdeckeinrichtung weist insbesondere Löcher zum Durchführen oder Anbringen der Armauflagen auf. Beispielsweise können mehrere kleine Löcher vorgesehen sein, durch welche Verbindungselemente durchführbar sind. Dabei weisen die Verbindungselemente einen erheblich kleineren Durchmesser als die Armauflagen auf.

In bevorzugten Weiterbildungen umfasst die Aerostützeinrichtung eine Verbindungseinheit zur Verbindung der zwei langgestreckten Aerostützen an dem vorderen Ende. Beispielsweise kann die Verbindungseinheit stabförmig ausgebildet sein und zur Aufnahme der Enden der Aerostützen zylinderförmige Löcher aufweisen. Die Verbindungseinheit kann Teil der Abdeckeinrichtung sein. Diese Verbindungseinheit oder dieses Brückenelement ist vorzugsweise von der Außenhülle des Abdeckkörpers der Abdeckeinrichtung abgedeckt. Deshalb ist die visuelle Gestaltung der Verbindungseinheit bei der vorliegenden Erfindung nicht so wichtig, da die Verbindungseinheit im Betriebszustand von der Abdeckeinrichtung abgedeckt ist und insofern nicht nach optischen und ästhetischen Gesichtspunkten, sondern insbesondere nach technischen und wirtschaftlichen Gesichtspunkten gestaltet werden kann. Dadurch sinkt der Herstellungsaufwand.

In allen Ausgestaltungen weist die Abdeckeinrichtung vorzugsweise stoßabsorbierende Bereiche auf, welche insbesondere hervorstehende Ecken abdecken und/oder an den Enden der Aerostützen angeordnet sind. Die stoßabsorbierenden Bereiche weisen insbesondere eine zusätzliche Polsterung auf, die durch eine Vielzahl von luft- oder gelgefüllten kammerartigen Abschnitten gebildet wird. Ein solcher stoßabsorbierenden Bereich wird vorzugsweise an der Verbindungseinheit vorgesehen, welche die Aerostützen miteinander verbindet.

Vorzugsweise ist die Abdeckeinrichtung aerodynamisch gestaltet. Insbesondere weist die Abdeckeinrichtung eine glatte Ober- und Unterseite auf, sodass zwischen den langgestreckten Aerostützen ebene Flächen vorhanden sind.

Vorzugsweise ist die Aerostützeinrichtung als Lenker ausgebildet oder umfasst eine Lenkstange.

Die erfindungsgemäße Abdeckeinrichtung ist für eine Aerostützeinrichtung eines Fahrrades vorgesehen und umfasst wenigstens einen flexiblen Abdeckkörper, welcher dazu geeignet ist, wenigstens zwei Aerostützen eines Lenkers und wenigstens zwei Armauflagen insgesamt nach vorn, oben und unten zu umgeben.

Eine solche Abdeckeinrichtung ist sehr vorteilhaft, da sie einen erhöhten Verletzungsschutz durch die Abdeckung der Aerostützen bietet.

Vorzugsweise weist der Abdeckkörper eine Verbindungseinheit zur Verbindung der vorderen Enden von zwei Aerostützen auf.

Der Abdeckkörper weist insbesondere eine elastische und flexible Ober- und Unterseite auf, die durch elastische und flexible Ober- und Unterschichten gebildet werden. Dadurch kann ein Benutzer die Aerostützen umgreifen, obwohl sie von dem Abdeckkörper umgeben sind, da er mit den Fingern die elastische Oberschicht und Unterschicht wegdrücken kann, so dass trotz einer an sich glatten Abdeckung ein fester Griff möglich ist.

In allen Ausgestaltungen ist der Abdeckkörper vorzugsweise angepasst, an unterschiedlich großen Aerostützen angebracht zu werden.

Vorteilhafterweise umfasst der Abdeckkörper eine flächige Polsterschicht, um Stöße abfangen zu können.

Insbesondere weist der Abdeckkörper ein Gewebe auf, welches vorzugsweise aus elastischen Fasern besteht. Neben elastischen Fasern kann auch ein Anteil an Verstärkungsfasern eingewebt werden, um neben einer hohen Elastizität auch eine hohe Festigkeit zu erreichen. Beispielsweise können Aramidfasern, Kohlenstofffasern, Borfasern, Glasfasern oder Keramikfasern eingewebt werden. Vorzugsweise werden Fasern mit einer hohen Reißfestigkeit und einem geringen spezifischen Gewicht eingesetzt.

In allen Weiterbildungen weist das Gewebe vorzugsweise eine glatte Deckschicht auf.

Weitere Vorteile und Anwendungsmöglichkeiten ergeben sich aus den Ausführungsbeispielen, die nun im Folgenden mit Bezug auf die Figuren beschrieben werden.

Darin zeigen:
- Fig. 1: eine schematische Aufsicht auf ein erstes Ausführungsbeispiel einer erfindungsgemäßen Aerostützeinrichtung,
- Fig. 2: eine Seitenansicht der langgestreckten Aerostützen der Aerostützeinrichtung nach Fig. 1,
- Fig. 3: eine schematische Aufsicht auf ein zweites Ausführungsbeispiel einer erfindungsgemäßen Aerostützeinrichtung, und
- Fig. 4: eine schematische Unteransicht der Aerostützeinrichtung nach Fig. 3.

Mit Bezug auf die Figuren werden nun Varianten eines Ausführungsbeispiels der Erfindung beschrieben.

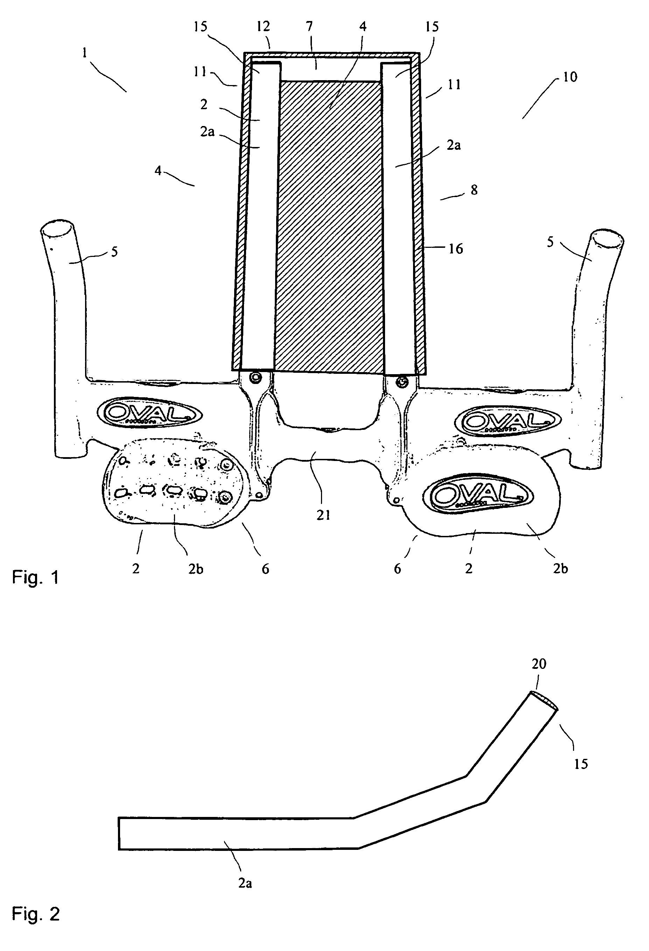

In Fig. 1 ist eine schematische Aufsicht auf eine erfindungsgemäßen Aerostützeinrichtung 1 dargestellt, die hier als Lenker 10 ausgebildet ist. In anderen Ausgestaltungen kann die Aerostützeinrichtung 1 auch als separates Teil ausgebildet sein, welches mit dem Lenker oder dem Vorbau des Fahrrads verbunden wird.

Der Lenker 10 umfasst eine Querstrebe 21, an deren äußeren Enden in Form von Lenkerhörnchen ausgebildete kurze Aerostützen 5 vorgesehen sind. Die Verbindung mit dem Vorbau erfolgt in einem zentralen Bereich an der oder unterhalb der Querstrebe 21.

Die Aerostützeinrichtung 1 umfasst hier im Ausführungsbeispiel insgesamt vier Stützkomponenten 2, nämlich zwei Aerostützen 2a und zwei Armauflagen 2b.

Zentral zwischen den kurzen Aerostützen 5 sind beabstandet voneinander die zwei langgestreckten Aerostützen 2a vorgesehen, die sich nach vorne hin erstrecken. Die Länge der Aerostützen 2a hängt von den konkreten Anforderungen ab und liegt insbesondere zwischen etwa 25 und 30 cm, während die Länge der kurzen Aerostützen 5 etwa 10 bis 15 cm beträgt, an deren Enden Brems- und/oder Schaltgriffe vorgesehen sein können.

An den vorderen Enden 15 der langgestreckten Aerostützen 2a können Schaltgriffe oder Schalthebel (nicht dargestellt) vorgesehen sein, wobei dann in der Abdeckeinrichtung 8 entsprechende kleine Löcher vorgesehen sind, um die Schalthebel durchzuführen.

Der seitliche Abstand der langgestreckte Aerostützen 2a beträgt im Ausführungsbeispiel zwischen etwa 7 cm und 15 cm, während die gesamte Breite etwa 35 bis 45 cm beträgt.

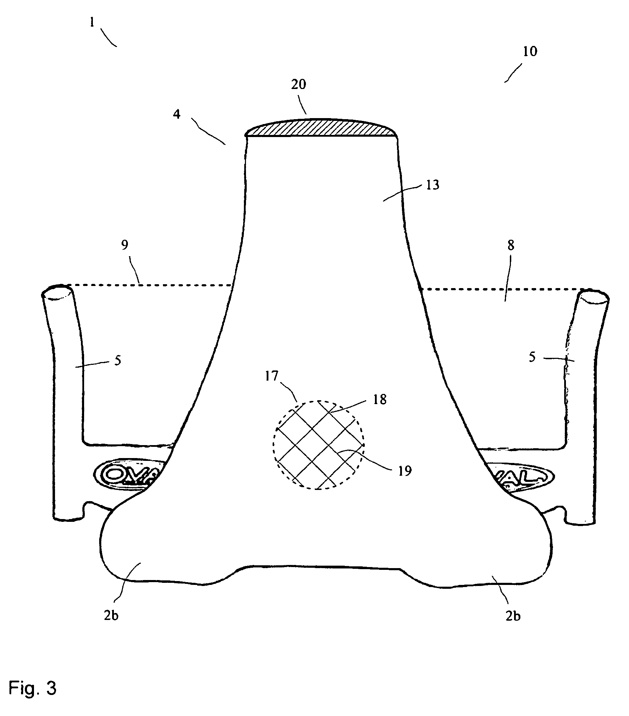

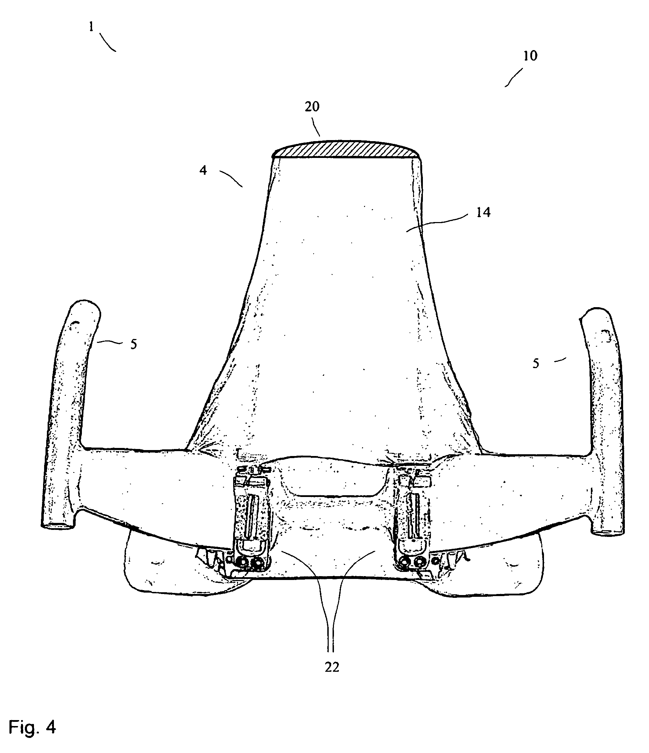

Die langgestreckten Aerostützen 2a sind hier erfindungsgemäß von einem Abdeckkörper 8 umgeben, der eine Oberseite 13 und eine Unterseite 14 aufweist (vgl. Fig. 3, 4). Teil der Abdeckeinrichtung 4 ist auch die Verbindungseinheit 7, welche die vorderen Enden 15 der langgestreckten Aerostützen 2a miteinander verbindet. Dadurch wird die mögliche Gefährdung des Fahrers und weiterer Dritter bei Unfällen etc. verringert, insbesondere wenn nach oben gebogene Aerostützen 2a eingesetzt werden, wie sie in Fig. 2 abgebildet sind.

Die Abdeckeinrichtung 4 umfasst hier eine flexible Polsterschicht 16, die die Aerostützen nach vorn, sowie nach oben und unten umgibt. Es ergeben sich stoßabsorbierende Bereiche 11 und 12 an der Seite und insbesondere am vorderen Ende 15, die im Falle von Unfällen einen erheblich Teil des Stoßimpulses aufnehmen und so zur Sicherheit erheblich beitragen. Die Bereiche stoßabsorbierende Bereiche 11 und 12 können an speziellen Stellen spezielle Verstärkungen aufweisen, insbesondere im Bereich der vorderen Enden 15 der Aerostützen 2a.

Der Abdeckkörper 8 kann mit entsprechenden Schlaufen an der Aerostützeinrichtung 1 befestigt werden, um ein unbeabsichtigten Lösen zu vermeiden.

Dadurch, dass die langgestreckten Aerostützen 2a im Wesentlichen vollständig nach unten, oben und nach vorn von dem Abdeckkörper 8 umgeben sind, wird außerdem ein besserer Windwiderstand erzielt, da nicht so viele einzelne Strömungshindernisse bestehen, die zu einer entsprechend hohen Anzahl an Verwirbelungen führen.

Erfindungsgemäß wird folglich sowohl die Sicherheit verbessert und auch die aerodynamische Situation des Fahrers.

Im Ausführungsbeispiel werden vorteilhafterweise flexible und dehnbare Materialien für die Oberflächen des Abdeckkörpers 8 eingesetzt. Dadurch kann ein Fahrer die Aerostützen 2a trotz vorhandenem Abdeckkörper 8 umgreifen, da die Oberflächen des Abdeckkörpers 8 nachgebend ausgestaltet sind.

Die in Fig. 2 dargestellten langgestreckten Aerostützen 2a sind hier zweifach nach oben gebogen. Am vorderen Ende 15 ist hier ein stoßabsorbierender Bereich 20 vorgesehen, der hier schematisch geschnitten dargestellt ist und der das vordere Ende 15 abdeckt.

Bei dem in Fig. 2 schematisch dargestellten Ausführungsbeispiel umgibt die Abdeckeinrichtung 4 nicht nur die langgestreckten Aerostützen 2a, sondern auch die als separate Armauflageeinheiten 6 ausgebildeten Armauflagen 2b.

Der schematisch geschnitten dargestellte Bereich 17 zeigt schematisch vergrößert einen Ausschnitt der Oberseite 13. Der Abdeckkörper 8 weist hier ein Gewebe 18 auf, welches unter rechtem Winkel angeordnete Fasern aufweist. Grundsätzlich kann das Gewebe aus unterschiedlichen natürlichen Stoffen oder aus Kunststofffasern bestehen. Beispielsweise können thermoplastische Fasern verwendet werden.

In bevorzugten Ausgestaltungen werden teilweise oder insgesamt Verstärkungsfasern eingesetzt, wie sie bei faserverstärkten Kunststoffen eingesetzt werden.

Das Gewebe 18 kann mit einer glatten Deckschicht überzogen sein. Beispielsweise kann eine gummiartige Schicht an der Oberfläche vorgesehen sein.

Möglich ist auch, dass die gesamte Abdeckeinrichtung 4 aus z.B. Elasthan oder dergleichen oder Latex oder Silikon oder ähnlichen oder vergleichbaren Materialien besteht.

Die wie in Fig. 1 ausgebildeten Aerostützen 2a werden am vorderen Ende von einem stoßabsorbierenden Abschnitt 20 bzw. Bereich abgedeckt. Der stoßabsorbierende Bereich 20 weist hier luftgefüllte Kammern auf, die im Falle eines heftigen Stoßes komprimiert und gegebenenfalls zerstört werden. Bei einem solchen Prozess nimmt der stoßabsorbierende Bereich 20 einen erheblichen Anteil der Stoßenergie auf, wodurch der Fahrer und Dritte Personen vor Verletzungen besser geschützt werden. Außerdem wird die Aerodynamik verbessert, da die vordere kante strömungsgünstig gestaltet wird.

Die gestrichelte Linie 9 deutet einen weiteren Abdeckkörper 8 an, der optional an den kurzen Aerostützen 5 vorgesehen sein kann, um auch diese Stützen abzudecken und den Strömungswiderstand zu optimieren.

In Fig. 4 ist eine Unteransicht der Aerostützeinrichtung 1 nach Fig. 3 dargestellt, welche hier über Befestigungselemente 22 an einem Lenker angebracht werden kann: Die Unterseite 14 weist mehrere ebene Flächen auf, die scharfkantige Teile oder Spitzen abdecken. Im Falle von Unfällen wird das Verletzungsrisiko auch bei Kontakt mit unteren Bereichen der Aerostützeinrichtung 1 erheblich reduziert.

In allen Ausgestaltungen kann an der Oberseite ein transparentes Fenster oder ein Loch vorgesehen sein, durch welches der Fahrradcomputer ablesbar und bedienbar ist.

Durch die flexible und dehnbare Ausgestaltung kann die Abdeckeinrichtung 4 an Aerostützeinrichtungen 1 unterschiedlicher Dimensionen eingesetzt werden, sodass die Notwendigkeit der Anfertigung unterschiedlicher Größen reduziert wird.

An den Armauflagen können ebenfalls Ausschnitte vorgesehen sein, um die z.B. mit einem Klettverschluss versehenen Armauflagen mit entsprechenden Belägen zu versehen.

Ein weiterer Vorteil der Erfindung ist, dass im Falle eines Unfalls abgebrochene Teile, Splitter und dergleichen innerhalb der Abdeckeinrichtung 4 verbleiben, wodurch z.B. die Schnittgefahr für den Fahrer und Dritte abnimmt.

### Bezugszeichenliste:

- 1: Aerostützeinrichtung
- 2: Stützkomponente
- 2a: langgestreckte Aerostütze
- 2b: Armauflage
- 4: Abdeckeinrichtung
- 5: kurze Aerostützen
- 6: Armauflageeinheit
- 7: Verbindungseinheit
- 8: Abdeckkörper
- 9: Kante
- 10: Lenker
- 11: stoßabsorbierender Bereich
- 12: stoßabsorbierender Bereich
- 13: Oberseite
- 14: Unterseite
- 15: vorderes Ende
- 16: Polsterschicht
- 17: Ausschnitt
- 18: Gewebe
- 19: Faser
- 20: stoßabsorbierender Bereich
- 21: Querstrebe
- 22: Befestigungselement

## Patentansprüche

1. Aerostützeinrichtung (1) für ein Fahrrad, umfassend wenigstens zwei als langgestreckte Aerostützen (2a) ausgebildete Stützkomponenten (2), die sich im bestimmungsgemäßen Gebrauch eines Fahrrads in eine vordere Richtung erstrecken und welche von einem Benutzer gegriffen werden können, sowie wenigstens zwei als Armauflagen (2b) ausgebildete Stützkomponenten (2), auf welchen ein Benutzer seine Unterarme oder Ellbogen abstützen kann, um z.B. einen geringeren Windwiderstand zu erzielen, wobei wenigstens eine Abdeckeinrichtung (4) vorgesehen ist, welche wenigstens zwei der Stützkomponenten (2) gemeinsam umgibt,
**dadurch gekennzeichnet,**
**dass** die Abdeckeinrichtung (4) wenigstens teilweise aus einem dehnbaren und flexiblen Material besteht.

2. Aerostützeinrichtung (1) nach Anspruch 1, wobei die Abdeckeinrichtung (4) die beiden langgestreckten Aerostützen (2a) und/oder die beiden Armauflagen (2b) gemeinsam umgibt.

3. Aerostützeinrichtung (1) nach mindestens einem der vorhergehenden Ansprüche, wobei zwei Abdeckeinrichtungen (4) vorgesehen sind, wobei jeweils eine Abdeckeinrichtung (4) jeweils eine langgestreckte Aerostütze (2a) und jeweils eine Armauflage (2b) gemeinsam umgibt.

4. Aerostützeinrichtung (1) nach mindestens einem der vorhergehenden Ansprüche, wobei zwei kurze Aerostützen (5) vorgesehen sind, welche an den Außenseiten angeordnet sind, wobei die kurzen Aerostützen (2a) eine freie Länge zwischen 10 cm und 20 cm aufweisen und wobei die langgestreckten Aerostützen (2a) eine Länge zwischen 20 cm und 35 cm aufweisen.

5. Aerostützeinrichtung (1) nach mindestens einem der vorhergehenden Ansprüche, wobei die Abdeckeinrichtung (4) wenigstens teilweise aus einem Gewebe besteht und/oder wobei die Abdeckeinrichtung (4) wenigstens teilweise aus einem Material besteht, welches einer Gruppe entnommen ist, die dehnbare Materialien, Elasthan, Latex und Silikon umfasst.

6. Aerostützeinrichtung (1) nach mindestens einem der vorhergehenden Ansprüche, wobei die beiden Armauflagen (2b) als jeweils separate Armauflageeinheiten (6) ausgebildet sind.

7. Aerostützeinrichtung (1) nach mindestens einem der vorhergehenden Ansprüche, wobei die Abdeckeinrichtung (4) Löcher zum Durchführen der Armauflagen (2b) aufweist.

8. Aerostützeinrichtung (1) nach mindestens einem der vorhergehenden Ansprüche, welche eine Verbindungseinheit (7) zur Verbindung der zwei langgestreckten Aerostützen (2a) an dem vorderen Ende umfasst, wobei die Verbindungseinheit (7) Teil der Abdeckeinrichtung (4) sein kann.

9. Aerostützeinrichtung (1) nach mindestens einem der vorhergehenden Ansprüche, wobei die Abdeckeinrichtung (4) stoßabsorbierende Bereiche (11, 12) aufweist.

10. Aerostützeinrichtung (1) nach mindestens einem der vorhergehenden Ansprüche, wobei die Abdeckeinrichtung (4) aerodynamisch gestaltet ist, wobei die Abdeckeinrichtung (4) insbesondere eine glatte Ober- und Unterseite aufweist, sodass zwischen den langgestreckten Aerostützen (2a) ebene Flächen vorhanden sind.

11. Aerostützeinrichtung (1) nach mindestens einem der vorhergehenden Ansprüche, welche als Lenker(10) ausgebildet ist.

12. Abdeckeinrichtung (4) für eine Aerostützeinrichtung (1) gemäß Anspruch 1 eines Fahrrades, welche einen Abdeckkörper (8) umfasst,
**dadurch gekennzeichnet,**
**dass** der Abdeckkörper (8) dazu geeignet ist, wenigstens zwei Aerostützen (2a) eines Lenkers (10) und wenigstens zwei Armauflagen (2b) insgesamt nach vorn, oben und unten zu umgeben, wobei der Abdeckkörper (8) wenigstens teilweise aus einem dehnbaren und flexiblen Material besteht.

13. Abdeckeinrichtung (4) nach einem dem vorhergehenden Anspruch, wobei der Abdeckkörper (8) eine flexible Ober- und eine flexible Unterseite (13, 14) aufweist, so dass ein Benutzer die mit dem Abdeckkörper (8) umgebenen Aerostützen (2a) umgreifen kann und/oder wobei der flexible Abdeckkörper (8) angepasst ist, an unterschiedlich großen Aerostützen (2a) angebracht zu werden.

14. Abdeckeinrichtung (4) nach einem der beiden vorhergehenden Ansprüche, wobei der Abdeckkörper (8) eine flächige Polsterschicht (16) aufweist, um Stöße abfangen zu können.

15. Abdeckeinrichtung (4) nach einem der drei vorhergehenden Ansprüche, wobei der Abdeckkörper (8) ein Gewebe (18) umfasst, welches insbesondere dehnbare Fasern (19) und eine glatte Deckschicht aufweist.

## Claims

1. An aero supporting device (1) for a bicycle, comprising at least two support components (2) structured as elongated aero supports (2a) that extend in a front direction of a bicycle when used in accordance with the intended purpose and which can be gripped by a user, as well as at least two support components (2) structured as arm rests (2b) on which a user can rest his forearms or elbows, for e.g. attaining a reduced drag, in which at least one covering device (4) is provided, which jointly surrounds at least two of the support components (2) **characterized in that** the covering device (4) consists of an elastic and flexible material at least in part.

2. The aero supporting device (1) according to claim 1, wherein the covering device (4) jointly surrounds the two elongated aero supports (2a) and/or the two elongated aero supports (2b).

3. The aero supporting device (1) according to at least one of the preceding claims, wherein two covering devices (4) are provided, and wherein each covering device (4) jointly surrounds an elongated aero support (2a) and an arm rest (2b).

4. The aero supporting device (1) according to at least one of the preceding claims, wherein two short aero supports (5) are provided which are arranged at the outer sides, wherein the short aero supports (2a) are between 10 cm and 20 cm in free length and wherein the elongated aero supports (2a) are between 20 cm and 35 cm in length.

5. The aero supporting device (1) according to at least one of the preceding claims, wherein the covering device (4) consists of a woven fabric at least in part and/or wherein the covering device (4) consists of a material, at least in part, that is taken from a group comprising elastic materials, spandex, latex, and silicone.

6. The aero supporting device (1) according to at least one of the preceding claims, wherein the two arm rests (2b) are designed as separate arm rest units (6).

7. The aero supporting device (1) according to at least one of the preceding claims, wherein the covering device (4) comprises holes for passing through the arm rests (2b).

8. The aero supporting device (1) according to at least one of the preceding claims, comprising a connecting unit (7) for connecting the two elongated aero supports (2a) at the front end, and wherein the connecting device (7) is part of the covering device (4).

9. The aero supporting device (1) according to at least one of the preceding claims, wherein the covering device (4) comprises shock absorbing areas (11, 12).

10. The aero supporting device (1) according to at least one of the preceding claims, wherein the covering device (4) is aerodynamic in design, wherein the covering device (4) comprises a smooth upper and lower surface, such that between the elongated aero supports (2a) plane surfaces are provided.

11. The aero supporting device (1) according to at least one of the preceding claims, which is designed as a handlebar (10) .

12. A covering device (4) for an aero supporting device (1) of a bicycle according to claim 1, comprising a covering body (8), **characterized in that** a covering body (8) is suitable for entirely surrounding forwardly, upwardly and downwardly at least two aero supports (2a) and at least two arm rests (2b) of a handlebar (10) wherein the covering body (8) consists of an elastic and flexible material at least in part.

13. The covering device (4) according to the preceding claim, wherein the covering body (8) comprises a flexible upper and a flexible lower surface (13, 14), such that a user can wrap his fingers around the aero supports (2a) surrounded by the covering body (8) and/or wherein the flexible covering body (8) is adapted to be mounted to aero supports (2a) of different sizes.

14. The covering device (4) according to any of the two preceding claims, wherein the covering body (8) comprises a sizeable padding layer (16), to be capable of absorbing shocks.

15. The covering device (4) according to any of the three preceding claims, wherein the covering body (8) comprises a fiber fabric (18), which comprises in particular elastic fibers (19) and wherein the fiber fabric comprises a smooth covering layer.

## Revendications

1. Dispositif d'aéro-protection (1) pour un vélo, comprenant au moins deux éléments d'appui (2) conçus en tant que prolongateurs aéro (2a) de forme allongée, lesdits éléments s'étirant, en usage régulier d'un vélo, vers l'avant et pouvant être saisis par un utilisateur, ainsi qu'au moins deux éléments d'appui (2) conçus en tant que repose-bras (2b), sur lesquels un utilisateur peut appuyer ses avant-bras ou ses coudes afin par exemple d'offrir moins de résistance au vent, au moins un dispositif de recouvrement (4) étant prévu, ledit dispositif entourant au moins deux éléments d'appui (2) ensemble,
**caractérisé en ce**
**que** le dispositif de recouvrement (4) est composé au moins en partie d'un matériau étirable et souple.

2. Dispositif d'aéro-protection (1) selon la revendication 1, le dispositif de recouvrement (4) entourant les deux prolongateurs aéro de forme allongée (2a) et/ou les deux repose-bras (2b) ensemble.

3. Dispositif d'aéro-protection (1) selon au moins l'une quelconque des revendications précédentes, deux dispositifs de recouvrement (4) étant prévus, chaque dispositif de recouvrement (4) entourant ensemble respectivement un prolongateur aéro de forme allongée (2a) et un repose-bras (2b).

4. Dispositif d'aéro-protection (1) selon au moins l'une quelconque des revendications précédentes, deux prolongateurs aéro courts (5) étant prévus, lesquels sont agencés aux extrémités latérales, les prolongateurs aéro courts (2a) présentant une longueur libre de 10 cm à 20 cm et les prolongateurs aéro longs (2a) présentant une longueur de 20 cm à 35 cm.

5. Dispositif d'aéro-protection (1) selon au moins l'une quelconque des revendications précédentes, le dispositif de recouvrement (4) étant composé au moins en partie d'un tissu et/ou le dispositif de recouvrement (4) étant composé au moins en partie d'un matériau issu d'un groupe comprenant des matériaux étirables, élasthanne, latex et silicone.

6. Dispositif d'aéro-protection (1) selon au moins l'une quelconque des revendications précédentes, les deux repose-bras (2b) étant conçus respectivement en tant qu'unités séparées de repose-bras (6).

7. Dispositif d'aéro-protection (1) selon au moins l'une quelconque des revendications précédentes, le dispositif de recouvrement (4) présentant des trous pour y faire passer les repose-bras (2b).

8. Dispositif d'aéro-protection (1) selon au moins l'une quelconque des revendications précédentes, comprenant une unité de liaison (7) pour relier les deux prolongateurs aéro de forme allongée (2a) à l'extrémité avant, ladite unité de liaison (7) pouvant faire partie du dispositif de recouvrement (4).

9. Dispositif d'aéro-protection (1) selon au moins l'une quelconque des revendications précédentes, le dispositif de recouvrement (4) présentant des zones d'absorption de choc (11, 12).

10. Dispositif d'aéro-protection (1) selon au moins l'une quelconque des revendications précédentes, le dispositif de recouvrement (4) étant de forme aérodynamique, ledit dispositif de recouvrement (4) présentant en particulier une face supérieure et une face inférieure lisses, de telle sorte qu'existent des surfaces planes entre les prolongateurs aéro de forme allongée (2a).

11. Dispositif d'aéro-protection (1) selon au moins l'une quelconque des revendications précédentes, ledit dispositif étant conçu en tant que cintre (10).

12. Dispositif de recouvrement (4) pour un dispositif d'aéro-protection (1) selon la revendication 1 d'un vélo, ledit dispositif comprenant un corps de recouvrement (8),
**caractérisé en ce**
**que** le corps de recouvrement (8) est susceptible d'entourer au moins deux prolongateurs aéro (2a) d'un cintre (10) et au moins deux repose-bras (2b) en tout vers l'avant, le haut et le bas, ledit corps de recouvrement (8) se composant au moins en partie d'un matériau étirable et souple.

13. Dispositif de recouvrement (4) selon l'une quelconque des revendications précédentes, le corps de recouvrement (8) présentant une face supérieure et une face inférieure souples (13, 14), de telle sorte qu'un utilisateur peut changer la position de saisie des prolongateurs aéro (2a) entourés du corps de recouvrement (8) et/ou le corps de recouvrement souple (8) étant adapté à une mise en oeuvre sur des prolongateurs aéro (2a) de tailles différentes.

14. Dispositif de recouvrement (4) selon l'une quelconque des deux revendications précédentes, le corps de recouvrement (8) présentant une couche de rembourrage surfacique (16) pour pouvoir absorber les chocs.

15. Dispositif de recouvrement (4) selon l'une quelconque des trois revendications précédentes, le corps de recouvrement (8) comprenant un tissu (18), ledit tissu présentant en particulier des fibres étirables (19) et une couche de finition lisse.
